# EUROPEAN PATENT APPLICATION

(11) **EP 1 947 433 A1**
(43) Date of publication of application: **23.07.2008**
(21) Application number: 06810741.6
(22) Date of filing: 28.09.2006
(51) Int. Cl.: G01K 7/00, G01K 7/01

(54) **METHOD FOR MEASURING TEMPERATURE OF SEMICONDUCTOR DEVICE AND APPARATUS FOR MEASURING TEMPERATURE OF SEMICONDUCTOR DEVICE**

(30) Priority: 28.09.2005 JP 2005281638
(71) Applicant: THE KANSAI ELECTRIC POWER CO., INC., Osaka-shi, Osaka 530-8270 (JP)
(72) Inventor: ASANO, Katsunori, Hyogo 6610974 (JP); SUGAWARA, Yoshitaka, Hyogo 6610974 (JP)
(74) Representative: Suckling, Andrew Michael
(86) International application number: PCT/JP2006/319294
(87) International publication number: WO 2007/037323

(57) **Abstract**

In the temperature measurement method for semiconductor devices, a junction temperature of a SiC GTO is determined by exploiting large temperature dependence of accumulation time ts as turn-OFF characteristic time of the SiC GTO that is a semiconductor switching element. The accumulation time ts is a time duration lasting from rise start time t1 of a gate turn-OFF current Ig until decay start time t2 of an anode current Ia. In this temperature measurement method, measured turn-OFF characteristic time is converted into a junction temperature of the SiC GTO based on relational characteristics between preliminarily measured accumulation time ts and junction temperatures.

## Description

### TECHNICAL FIELD

The present invention relates to temperature measurement method and temperature measurement device for semiconductor switching elements such as GTOs (Gate Turn-Off thyristors).

### BACKGROUND ART

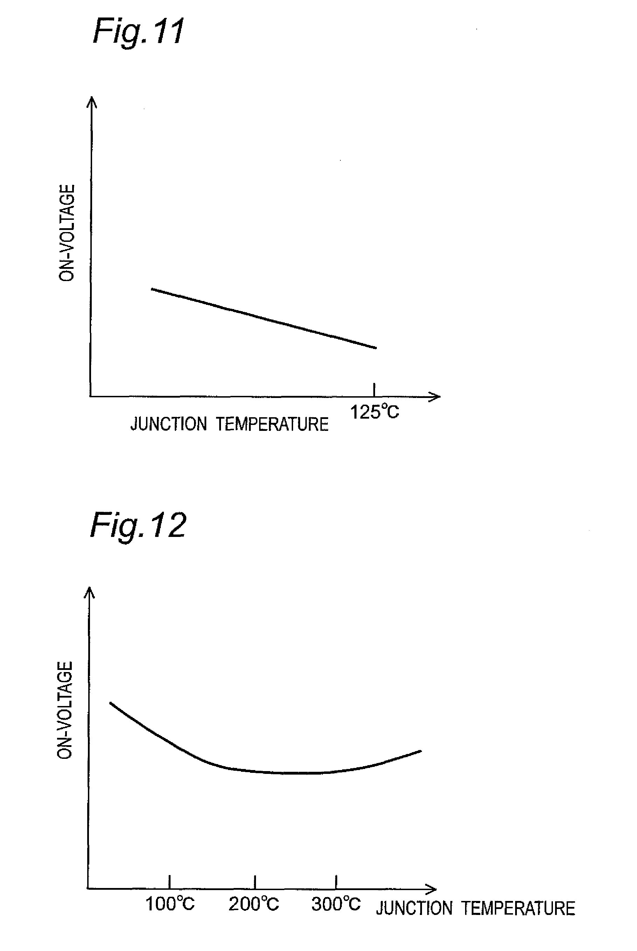

A conventionally available method for measuring junction temperature (temperature of a junction portion) in a semiconductor device is that a thermal element such as a thermocouple is put into direct contact with a junction of the semiconductor device to measure the temperature of the junction. Another measurement method is that with preliminary examinations of temperature dependence of the ON-state voltage relative to a specified current in the semiconductor device such as shown in Fig. 11, junction temperature of the semiconductor device is determined indirectly by the value of the ON-state voltage.

Also conventionally, it has been practiced that inspection of a semiconductor device incorporated in an inverter is performed by measuring resistance values between terminals of a diode or a semiconductor switching element in periodic inspections of the inverter. As has been the case, presence or absence of any abnormality in the semiconductor device is determined by measuring a resistance value of the semiconductor device, and based on the determination as to the presence or absence of abnormality, the semiconductor device is subjected to replacement or other proper procedures.

In the former method in which a thermocouple or other thermal element is put into direct contact with a junction of the semiconductor device to measure the junction temperature, there is a need for opening the package of the semiconductor device as a test specimen and then fitting the thermal element in place. Due to this fitting of the thermal element, there have been drawbacks, for example, that measurement of the junction temperature in a current conducting state restricts electrical insulation, and moreover that the thermal element serves as a heat-absorbing source to cause errors in temperature measurement of the junction in the semiconductor device. Furthermore, because the temperature detection by the thermal element does not follow the actual temperature increasing speed of the junction, there is a problem that the junction temperature detected by the thermal element cannot be utilized for protection from heating of the semiconductor device or the like.

The latter method for measuring the junction temperature indirectly by using the temperature dependence of the ON-state voltage is incapable of measurement on condition that there is essentially no temperature dependence of ON-state voltage for some structural reason of the semiconductor device that is the measurement object. Further, small temperature changes in the measurement object would cause the measurement accuracy to deteriorate. For these reasons, the applicable range of the method to semiconductor devices to be measured has been restricted.

In bipolar semiconductor devices using wide-gap semiconductors of SiC, gallium nitride, diamond and the like, which are usable at temperatures much higher than the use critical temperature of conventional Si semiconductor devices, about 125°C, the ON-state voltage decreases gradually with increasing temperatures ranging from low temperatures to about 200°C as illustrated in Fig. 12.

However, as illustrated in Fig. 12, the ON-state voltage of these bipolar semiconductor devices using wide-gap semiconductors comes to scarcely have temperature dependence when the junction temperature become 200°C or higher. Then, with the junction temperature further higher, the ON-state voltage increases, conversely. With such a semiconductor device, there are some cases where junction temperatures of 200°C or higher cannot be measured with high accuracy or, if they can, only can be done with considerably poor accuracy.

Also, in a case where the measurement-object semiconductor device is a high-power semiconductor device of a pressure-contact structure and where a junction temperature of this high-power semiconductor device is determined by using the temperature dependence of ON-state voltage, changes of the ON-voltage in some cases do not sufficiently reflect an average junction temperature over the entire junction surface of the measurement object. This phenomenon occurs due to reasons, for example, that a change in pressure-contact force in the pressure-contact structure causes the contact resistance of an internal electrode to be changed, or that a measurement current to obtain an ON-voltage does not flow uniformly through the whole measurement-object semiconductor device. Furthermore, when the current instantaneous changes, it is difficult to discriminate between a voltage change occurring from the current change and a voltage change occurring from a junction temperature change, making it impossible to determine the junction temperature with high accuracy, as a further drawback.

Further, the lives of component parts of the inverter large depends on ambient temperature and use conditions. Since deteriorations of these component parts often progress rapidly from a certain time stage, it may occur that component abnormalities are not found by conventionally practiced periodic inspections, leading to failures of the inverter device. With diodes or semiconductor switching elements incorporated in an inverter, abnormalities or failures often cannot be determined only by checking for resistance values between their terminals.
Patent document 1: JP H05-215809 A
Patent document 2: JP 3054404 B

### DISCLOSURE OF THE INVENTION

Accordingly, an object of the present invention to provide temperature measurement method and temperature measurement device for semiconductor devices capable of detecting the junction temperature of a semiconductor device with high accuracy and without delays.

In order to achieve the above object, there is provided a temperature measurement method for semiconductor devices, comprising:
a first step for, with a semiconductor switching element set to a specified temperature, performing a characteristic measurement for turning OFF the semiconductor switching element of the specified temperature from an ON state and measuring specified turn-OFF characteristic time at the turn-OFF, the characteristic measurement being done a plurality of times with temperature changed to preliminarily measure a relational characteristic between the turn-OFF characteristic time and temperatures of the semiconductor switching element;
a second step for turning OFF the semiconductor switching element from an ON state and measuring the turn-OFF characteristic time at the turn-OFF; and
a third step for converting the turn-OFF characteristic time measured in the second step into a temperature of the semiconductor switching element based on the relational characteristic preliminarily measured in the first step.

According to the temperature measurement method of this invention, a temperature of a semiconductor switching element is determined by exploiting large temperature dependence of turn-OFF characteristic time of the semiconductor switching element. That is, according to the invention, the turn-OFF characteristic time measured by the second step is converted into a temperature of the semiconductor switching element based on relational characteristics between turn-OFF characteristic time of the semiconductor switching element and temperatures preliminarily measured by the first step. Thus, according to this invention, junction temperatures of semiconductor devices can be detected with high accuracy and without delay.

In one embodiment of the invention, the semiconductor switching element is a bipolar semiconductor element.

In one embodiment of the invention, the semiconductor switching element is a GTO, and
the turn-OFF characteristic time is
accumulation time lasting from a rise start time point of a gate turn-OFF current until a decay start time point of an anode current.

According to the temperature measurement method for semiconductor devices in this embodiment, temperatures (junction temperatures) of a GTO as a semiconductor switching element can be measured with high accuracy by measuring accumulation time of the GTO.

In one embodiment of the invention, the semiconductor switching element is a GTO, and
the turn-OFF characteristic time is
rise time of an anode-cathode voltage.

According to the temperature measurement method for semiconductor devices in this embodiment, temperatures (junction temperatures) of a GTO as a semiconductor switching element can be measured with high accuracy by measuring rise time of an anode-cathode voltage of the GTO.

In one embodiment of the invention, the semiconductor switching element is a GTO, and
the turn-OFF characteristic time is
decay time of an anode current.

According to the temperature measurement method for semiconductor devices in this embodiment, temperatures (junction temperatures) of a GTO as a semiconductor switching element can be measured with high accuracy by measuring decay time of an anode current of the GTO.

In one embodiment of the invention, the semiconductor switching element is a SiC GTO. In particular, it has been experimentally proved that the turn-OFF characteristic of SiC GTOs has large temperature dependence of their junction portions.

In one embodiment of the invention, the semiconductor switching element is GaN GTO.

In one embodiment of the invention, the semiconductor switching element is a diamond GTO.

In one embodiment of the invention, a temperature measurement device for measuring temperature of a semiconductor device by using the above temperature measurement method, the measurement device comprising:
a DC power supply for applying a DC voltage to between output terminals of a semiconductor switching element;
a control circuit for inputting a control signal to a control terminal of the semiconductor switching element to turn ON and OFF the semiconductor switching element;
a waveform measurement section for measuring a turn-OFF waveform of the semiconductor switching element;
a waveform computing section for computing specified turn-OFF characteristic time based on a turn-OFF waveform measured by the waveform measurement section; and
a temperature calculating section in which data representing relational characteristics between preliminarily measured turn-OFF characteristic time of the semiconductor switching element and temperatures of the semiconductor switching element are stored and which determines, from the relational characteristics, a temperature of the semiconductor switching element corresponding to the turn-OFF characteristic time inputted from the waveform computing section.

According to the temperature measurement device for semiconductor devices in this embodiment, the semiconductor switching element is turned OFF by the control circuit, the turn-OFF waveform is measured by the waveform measurement section, and turn-OFF characteristic time is computed from the turn-OFF characteristic time by the waveform computing section. Then, based on the preliminarily measured relational characteristics between turn-OFF characteristic time and temperatures, the temperature calculating section determines a temperature of the semiconductor switching element corresponding to the turn-OFF characteristic time inputted from the waveform computing section. Thus, according to this embodiment, junction temperatures of semiconductor devices can be detected with high accuracy and without delay.

In one embodiment of the invention, the waveform measurement section has at least one of an output current measurement section for measuring a current flowing between the output terminals of the semiconductor switching element, a control current measurement section for measuring a current flowing through the control terminal, a control voltage measurement section for measuring a voltage of the control terminal, and an output voltage measurement section for measuring a voltage between the output terminals.

According to the temperature measurement device for semiconductor devices in this embodiment, turn-OFF waveforms of an output current, a control current, a control voltage and an output voltage can be measured by the output current measurement section, the control current measurement section, the control voltage measurement section and the output voltage measurement section as the waveform measurement section.

In one embodiment of the invention, a thermal resistance measurement method for measuring thermal resistance of a semiconductor device by using the above temperature measurement method, the method comprising:
a first measurement step for preliminarily measuring relational characteristics between turn-OFF characteristic time of a semiconductor switching element and temperatures of the semiconductor switching element by the first step;
a second measurement step for measuring a first temperature of the semiconductor switching element, then turning ON the semiconductor switching element, and after elapse of specified time after the turn-ON, turning OFF the semiconductor switching element and measuring a second temperature of the semiconductor switching element by the second and third steps; and
a step for determining a thermal resistance by a calculation that a value resulting from subtracting the first temperature from the second temperature is divided by a heating value of the semiconductor switching element generated during the specified time.

According to the thermal resistance measurement method for semiconductor devices in this embodiment, a thermal resistance can be derived from a loss (heating value) during the ON period in the second measurement step and a temperature increment from the first temperature to the second temperature, so that thermal resistance can be detected with high accuracy even at high temperatures (e.g., 200°C or higher in wide-gap semiconductors). It is noted that the measurement of the first temperature in the second measurement step may be performed either with a contact surface thermometer as an example or by the second and third steps in the temperature measurement method for semiconductor devices according to the invention.

In one embodiment of the invention, a thermal resistance measurement device for measuring thermal resistance of a semiconductor device by using the above thermal resistance measurement method, the device comprising:
a DC power supply for applying a DC voltage via a load to between output terminals of a semiconductor switching element;
a control circuit for inputting an ON control signal to a control terminal of the semiconductor switching element to turn ON the semiconductor switching element from an OFF state, and after elapse of specified time after the turn-ON of the semiconductor switching element, inputting an OFF control signal to the control terminal to turn OFF the semiconductor switching element;
a waveform measurement section for measuring a waveform of the turn-OFF of the semiconductor switching element;
a waveform computing section for computing specified turn-OFF characteristic time based on the turn-OFF waveform measured by the waveform measurement section;
a temperature calculating section in which data representing relational characteristics between preliminarily measured turn-OFF characteristic time of the semiconductor switching element and temperatures of the semiconductor switching element are stored and which determines, from the relational characteristics, a temperature of the semiconductor switching element corresponding to the specified turn-OFF characteristic time inputted from the waveform computing section; and
a thermal resistance calculating section for determining a thermal resistance by such a calculation that subtracting a before-turn-ON temperature of the semiconductor switching element from the temperature of the semiconductor switching element determined by the temperature calculating section and dividing the result by a heating value of heat generated by the semiconductor switching element during the specified time.

According to the thermal resistance measurement device in this embodiment, the semiconductor switching element is, from an OFF state, turned ON, and OFF, sequentially by the control circuit, and the turn-OFF waveform is measured by the waveform measurement section. The waveform computing section computes specified turn-OFF characteristic time based on the turn-OFF waveform, and the temperature calculating section determines a temperature of the semiconductor switching element from the turn-OFF characteristic time. Then, the thermal resistance calculating section determines a thermal resistance by such a calculation that subtracting the before-turn-ON temperature of the semiconductor switching element from the temperature of the semiconductor switching element determined by the temperature calculating section and dividing the result by a heating value of heat generated by the semiconductor switching element during the specified time. Thus, thermal resistance of semiconductor switching elements can be detected with high accuracy even at high temperatures (e.g., 200°C or higher in wide-gap semiconductors).

In one embodiment of the invention, a degradation status evaluation method for semiconductor devices for evaluating a degradation status of a semiconductor device based on a thermal resistance measured by the above thermal resistance measurement method.

According to the temperature measurement method for semiconductor devices in this invention, a temperature of a semiconductor switching element is determined by exploiting large temperature dependence of turn-OFF characteristic time of the semiconductor switching element. That is, according to the invention, the turn-OFF characteristic time measured by the second step is converted into a temperature of the semiconductor switching element based on relational characteristics between turn-OFF characteristic time and temperatures preliminarily measured by the first step. Thus, according to this invention, junction temperatures of semiconductor devices can be detected with high accuracy and without delay.

### BRIEF DESCRIPTION OF THE DRAWINGS

Fig. 1 is a waveform diagram showing a turn-OFF waveform of a SiC GTO which is to be explained in a first embodiment of the present invention;
Fig. 2 is a characteristic chart showing a relationship between accumulation time as turn-OFF characteristic time and junction temperature of the SiC GTO that is to be explained in the first embodiment;
Fig. 3 is a view schematically showing the structure of the SiC GTO;
Fig. 4 is a chart showing an example of relational characteristics between rise time tv of anode-cathode voltage Vak and junction temperature in the SiC GTO;
Fig. 5 is a chart showing an example of relational characteristics between decay time ti of anode current Ia and junction temperature in the SiC GTO;
Fig. 6 is a circuit diagram showing a temperature measurement device for semiconductor devices as a second embodiment of the invention;
Fig. 7 is a block diagram showing a signal processing system in the second embodiment;
Fig. 8 is a flowchart for explaining operations in the second embodiment;
Fig. 9 is a process chart for explaining a thermal resistance measurement method for semiconductor devices according to a third embodiment of the invention;
Fig. 10 is a waveform diagram for explaining the third embodiment;
Fig. 11 is a chart showing a relationship between ON-state voltage and junction temperature of a semiconductor device used in a prior art example; and
Fig. 12 is a chart showing a relationship between ON-state voltage and junction temperature of a bipolar semiconductor device using a wide-gap semiconductor.

### DETAILED DESCRIPTION OF THE INVENTION

Hereinbelow, the present invention will be described in detail by way of embodiments thereof illustrated in the accompanying drawings.

### (First Embodiment)

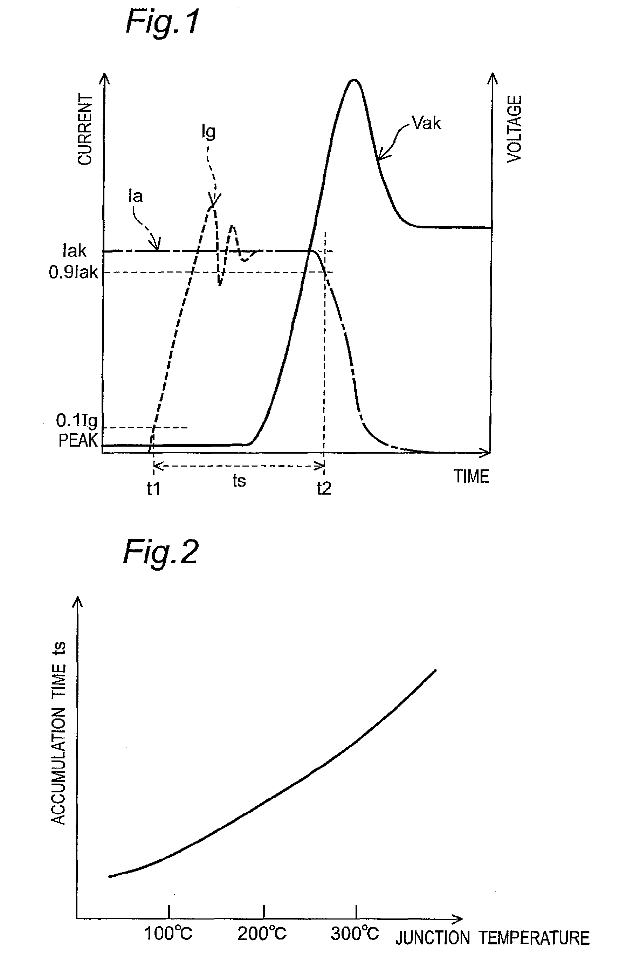

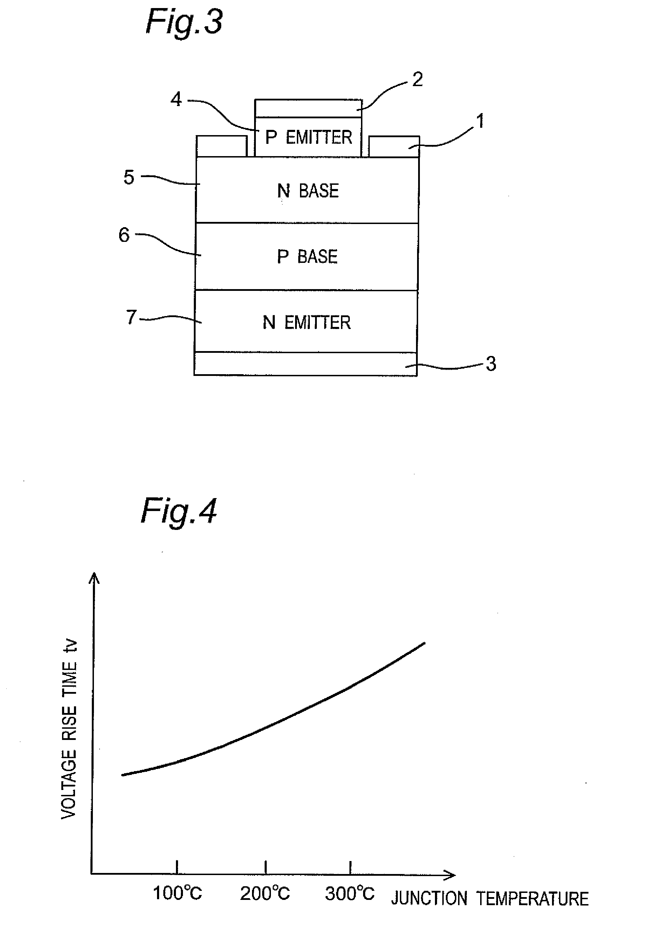

A temperature measurement method for semiconductor devices, which is a first embodiment of the invention, is described with reference to Figs. 1 to 3. The first embodiment is a method for detecting a junction temperature of a SiC GTO (Gate Turn-Off thyristor) as an example of a semiconductor switching element without delay. Fig. 3 shows an example of the GTO structure, where reference numeral 1 denotes a gate, 2 denotes a cathode, 3 denotes an anode, 4 denotes a P emitter, 5 denotes an N base, 6 denotes a P base, and 7 denotes an N emitter.

In the GTO, with a potential of the anode 3 higher than a potential of the cathode 2, a potential of the gate 1 is set lower than the potential of the anode 3, and a forward bias voltage is applied to between the anode 3 and the gate 1. Then, a turn-ON current flows from the anode 3 to the gate 1, and moreover a current flows from the anode 3 to the cathode 2, so that the GTO turns ON, resulting in an ON state.

In this ON state, a reverse bias voltage is applied to between the anode 3 and the gate 1. Then, an electron current flowing from the cathode 2 to the anode 3, or holes flowing from the anode 3 to the cathode 2, are diverted to the gate 1, so that a gate turn-OFF current flows, causing the GTO to turn OFF.

Fig. 1 shows a current-voltage waveform at turn-OFF of the GTO, where reference character Ia denotes an anode current, Vak denotes an anode-cathode voltage, and Ig denotes a gate turn-OFF current. It is noted that in Fig. 1, ts is referred to as accumulation time. The accumulation time ts refers to a time duration which, when the GTO is switched from ON to OFF state by the gate turn-OFF current Ig, elapses from a rise start time t1 of the gate turn-OFF current Ig to a decay start time t2 of the anode current Ia.

In addition, the rise start time t1 of the gate turn-OFF current Ig is set, for example, to a time point at which the gate turn-OFF current Ig reaches 10% of its peak value. The decay start time t2 of the anode current Ia is set, for example, to a time point at which the anode current Ia reaches 0.9Iak, which is a value corresponding to a 10% drop from a maximum value Iak. Naturally, the rise start time t1 is not limited to the time point at which the gate turn-OFF current Ig reaches 10% of its peak value. Instead, the rise start time t1 may be set to a time point at which the gate turn-OFF current Ig reaches a value lower than 10% (e.g., 3%, 5%, 8%) of the peak value, or a value higher than 10% (e.g., 12% or 15%) of the peak value. Also, the decay start time t2 is naturally not limited to a time point at which the anode current Ia reaches 0.9Iak, which is a value corresponding to a 10% drop from a maximum value Iak. Instead, the decay start time t2 may be set to a time point at which the anode current Ia reaches a value corresponding to a more than 10% drop (e.g., 12%, 15%) from the maximum value Iak, or a time point at which the anode current Ia reaches a value corresponding to a lower than 10% (e.g., 5%, 8%) drop from the maximum value Iak.

As shown in Fig. 2, the accumulation time ts has large temperature dependence on the junction temperature of the GTO. Fig. 2 is a chart showing a relational characteristic between the junction temperature of the GTO and the accumulation time ts.

In the case of SiC, Al or B or the like to be used as a p-type dopant is deep in acceptor level and only partly ionized under low temperatures, but increases in ionization rate with increasing temperature. The GTO has a pnpn (p emitter, n base, p base, n emitter) four-layered structure, and therefore a GTO using a semiconductor having a dopant of deep acceptor level goes into a state of high p-type hole density under high temperatures. When the hole density of the p emitter of the GTO goes high, holes to be injected from the p emitter through the n base into the p base increase during turn-ON. When this occurs, electrons are injected from the n emitter into the p base by the charge neutralization condition, so that carriers in the p base increase. Also, when the temperature becomes higher, minority carriers are elongated in life time. By influences of these, when the temperature becomes higher, excess carriers in the p base increase so that the accumulation time ts at turn-OFF becomes longer.

Therefore, in this embodiment, the accumulation time ts at turn-OFF of the GTO is measured (second step), by which a junction temperature of the GTO is detected (third step). For this purpose, there is a need for preliminarily measuring the temperature dependence of the accumulation time ts such as shown in the relational characteristic chart of Fig. 2 (first step).

The temperature dependence of the accumulation time ts is measured in the following way as an example.

The GTO and the package in which the GTO is housed constitute a semiconductor device. The package in which the GTO is housed is heated or placed within a thermostat, and time is allowed to elapse until the GTO package temperature is stabilized at a specified temperature. When the temperature is stabilized, the GTO junction temperature is also stabilized at the specified temperature. At this time point of stabilization, the GTO is turned ON for a specified time duration, and then turned OFF. The specified time duration for turn-ON in this case is set to such a short time period (e.g., about 10 µsec to 200 µsec or so) in which the GTO junction temperature does not increase.

Then, as described above, the accumulation time ts is measured from waveforms of the gate turn-OFF current Ig and the anode current Ia at turn-OFF such as illustrated in Fig. 1. The measurement of the accumulation time ts is carried out at a plurality of different temperatures of the GTO package. As a result, a relational characteristic (temperature dependence characteristic) between the accumulation time ts and the junction temperature of the GTO, such as illustrated in Fig. 2, can be obtained. This relational characteristic measurement constitutes the first step.

Such a temperature dependence characteristic of the accumulation time ts as shown in Fig. 2 is used as a conversion curve for converting the measured accumulation time ts into a GTO junction temperature. That is, the accumulation time ts has a GTO junction temperature reflected thereon. Therefore, exploiting the conversion curve makes it possible to detect a GTO junction temperature from the accumulation time ts without time delay. Also, the large temperature dependence of the accumulation time ts allows the GTO junction temperature to be measured with high accuracy. Thus, the rating of the GTO can be decided stably with high reliability maintained. Moreover, in ON/OFF intermittent performance test of the GTO or the like, the GTO junction temperature can be measured with high accuracy and good responsibility.

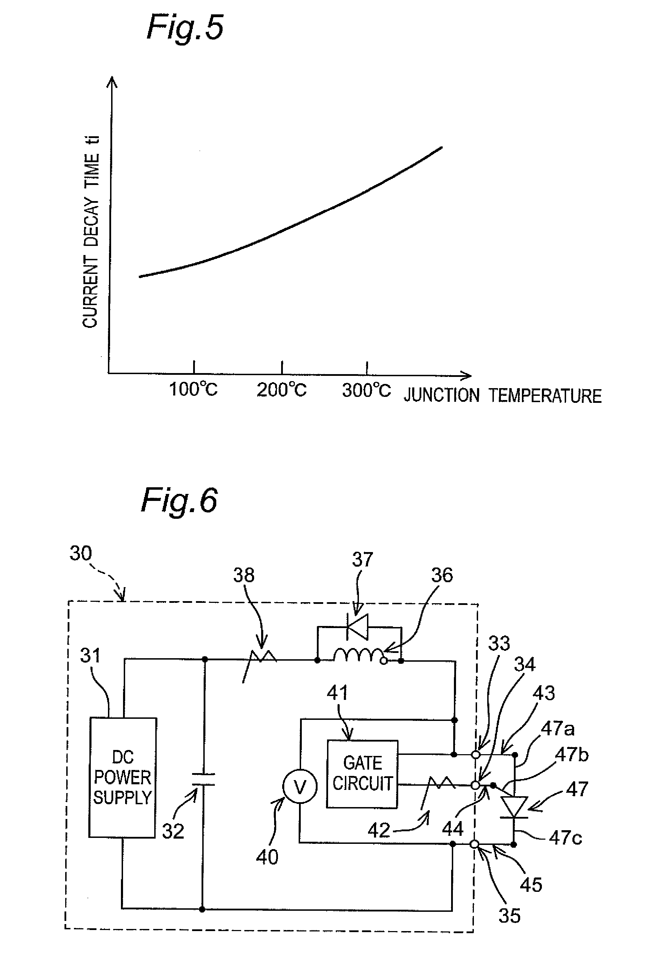

In this embodiment, the junction temperature of the GTO is measured by exploiting the temperature dependence characteristic of the accumulation time ts of the GTO such as shown in Fig. 1. However, a relational characteristic (dependence characteristic) between the rise time tv of the anode-cathode voltage Vak and the temperature of the GTO shown in Fig. 1 may also be used for conversing into the GTO junction temperature. The rise time tv of the anode-cathode voltage Vak is set, for example, to a time duration lasting from when the voltage Vak is 10% until when the voltage Vak reaches 90% of the peak value. One example of the relational characteristic (temperature dependence characteristic) between the rise time tv of the anode-cathode voltage Vak and the junction temperature of the GTO is shown in Fig. 4. Also, the temperature dependence characteristic of a decay time ti of the anode current Ia of the GTO shown in Fig. 1 may also be utilized for conversing into the GTO junction temperature. The decay time ti of the anode current Ia is set, for example, to a time duration lasting from when the anode current Ia is 90% until when the anode current Ia lowers 10% of the maximum value Iak. A relational characteristic (temperature dependence characteristic) between the decay time ti of the anode current Ia and the junction temperature of the GTO is shown in Fig. 5.

In addition, naturally, the rise time tv of the anode-cathode voltage Vak is not limited to the time duration lasting from when the voltage Vak is 10% until when the voltage Vak reaches 90% of the peak value. Instead, the rise time tv may be set to various time ranges such as a time duration lasting from when the voltage Vak is 5% until when the voltage Vak reaches 95% of the peak value, or a time duration lasting from when the voltage Vak is 15% until when the voltage Vak reaches 85% of the peak value. Also, the decay time ti of the anode current Ia is naturally not limited to a time duration lasting from when the anode current Ia is 90% until when the anode current Ia lowers to 10% of the maximum value Iak. Instead, the decay time ti may be set to various time ranges such as a time duration lasting from when the anode current Ia is 95% until when the anode current Ia reaches 5% of the peak value, or a time duration lasting from when the anode current Ia is 85% until when the anode current Ia reaches 15% of the peak value.

Also, the accumulation time ts is defined as a time duration lasting from the rise start time of the gate turn-OFF current Ig until when the anode current Ia starts to decrease as described before. However, when the CT (Current Transformer) cannot be mounted in terms of gate interconnections, or when inductance of the gate interconnections matters, the accumulation time ts may also be determined by measuring the gate voltage with a gate voltage measurement section (not shown) serving as a control voltage measurement section. For instance, with definition of an accumulation time that is a time duration lasting from when a gate reverse voltage rises until when the anode-cathode voltage Vak becomes equal to the supply voltage, temperature dependence characteristics of this accumulation time may be utilized as the conversion curve for GTO junction temperatures.

Also, although the above embodiment has been described on a case where the semiconductor switching element is a SiC GTO, the invention is also applicable to semiconductor switching elements having large temperature dependence of turn-OFF period waveforms, such as SiC bipolar semiconductor elements exemplified by SiC IGBT insulated-gate bipolar transistors. The invention is further applicable to other GTOs without being limited to SiC GTOs, as well as applicable to other bipolar semiconductor elements without being limited to SiC bipolar semiconductor elements.

### (Second Embodiment)

Next, a temperature measurement device for semiconductor devices, which is a second embodiment of the invention, is described with reference to Figs. 6 to 8.

This measurement device 30 for junction temperatures has a DC power supply 31, a capacitor 32 connected in parallel with the DC power supply 31, and a first terminal 33, a second terminal 34, a third terminal 35. Between the first terminal 33 and one end of the DC power supply 31, a load reactor 36 and a first transformer 38 as an output current measurement section are connected in series. Also, the third terminal 35 is connected to the other end of the DC power supply 31. Besides, a feedback diode 37 is connected in parallel with the load reactor 36.

Also, a voltmeter 40 as an output voltage measurement section is connected between the first terminal 33 and the third terminal 35. One end of a gate circuit 41 is connected to the first terminal 33, and the other end of the gate circuit 41 is connected to the second terminal 34. Between the other end of the gate circuit 41 and the second terminal 34 is connected a second transformer 42 as a control current measurement section.

Meanwhile, a first connecting member 43 is connected to the first terminal 33, a second connecting member 44 is connected to the second terminal 34, and a third connecting member 45 is connected to the third terminal 35. Further, the first connecting member 43 is connected to a cathode 47a of a SiC GTO 47 as a junction temperature measurement object, the second connecting member 44 is connected to a gate 47b of the SiC GTO 47, and the third terminal 35 is connected to an anode 47c of the SiC GTO 47. The DC power supply 31 is connected to the anode 47c side of the SiC GTO 47 in a direction in which a positive voltage is applied.

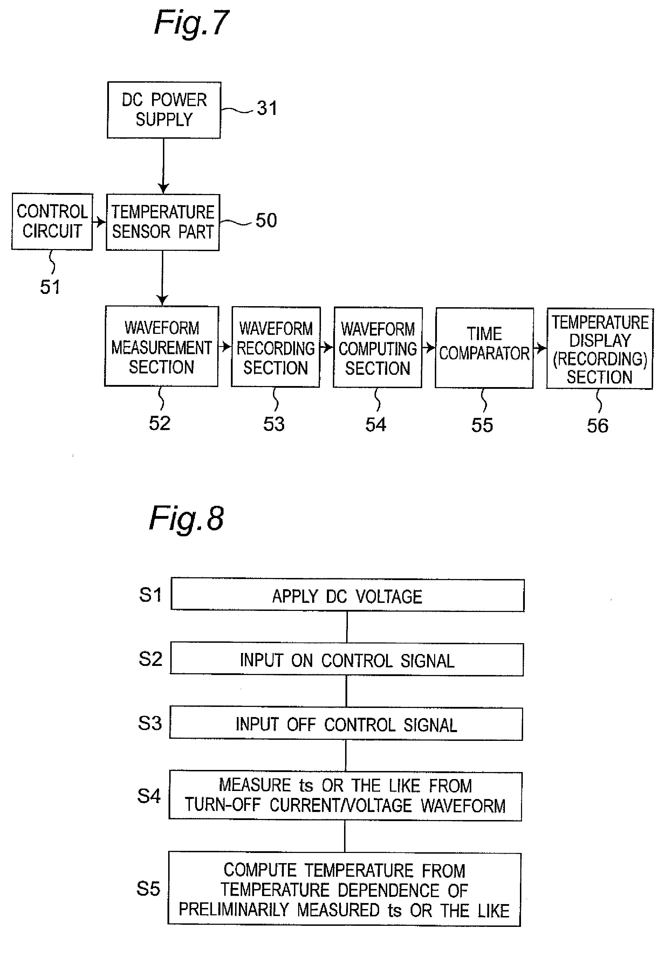

Also, the junction temperature measurement device 30, as shown in the block diagram of Fig. 7, has the DC power supply 31, a temperature sensor part 50, a control circuit 51, a waveform measurement section 52, a waveform recording section 53, a waveform computing section 54, a time comparator 55 as a temperature calculating section, and a temperature display (recording) section 56. The temperature sensor part 50 has the gate circuit 41, the first to third terminals 33 - 35, and the first to third connecting members 43 - 45. Besides, the waveform measurement section 52 has the first transformer 38, the second transformer 42 and the voltmeter 40.

Next, operations of this junction temperature measurement device 30 are described with reference to the flowchart of Fig. 8.

First, at step S1, a DC voltage is applied to between the anode 47c and the cathode 47a of the SiC GTO 47 from the DC power supply 31 via the first terminal 33, the third terminal 35, the first connecting member 43 and the third connecting member 45, where the anode 47c side is polarized positive by the DC voltage.

Next, at step S2, the control circuit 51 controls the gate circuit 41 of the temperature sensor part 50 to input an ON control signal from the gate circuit 41 via the second terminal 34 and the second connecting member 44 to the gate 47b of the GTO 47 so that the GTO 47 is turned ON. As a result, a current flows from the DC power supply 31 via the third terminal 35, the GTO 47 and the first terminal 33 to the load reactor 36.

Then, after elapse of a specified short time, the processing flow goes to step S3, where the control circuit 51 controls the gate circuit 41 to input an OFF control signal from the gate circuit 41 to the gate 47b of the GTO 47 so that the GTO 47 is turned OFF.

The specified short time refers to, for example, a time duration lasting until the current flowing through the load reactor 36 reaches a specified value. That is, the ON-state time of the GTO 47 is set to enough short time to prevent junction temperature from being increased by the ON-state current. It is noted that the current flowing through the load reactor 36 is detected by using the first transformer 38 of the waveform measurement section 52.

Next, the processing flow goes to step S4, where the waveform measurement section 52 measures a gate turn-OFF current Ig, such as illustrated in Fig. 1, by the second transformer 42. Also, the waveform measurement section 52 measures an anode current Ia, which is an output current such as illustrated in Fig. 1, by the first transformer 38. Further, the waveform measurement section 52 measures an anode-cathode voltage Vak, which is an output voltage such as illustrated in Fig. 1, by the voltmeter 40. In this case, the gate voltage may also be measured by the gate circuit 41.

The gate turn-OFF current Ig, the anode current Ia and the anode-cathode voltage Vak measured by the waveform measurement section 52 are inputted to the waveform recording section 53, where a waveform of the gate turn-OFF current Ig, a turn-OFF waveform of the anode current Ia and a turn-OFF waveform of the anode-cathode voltage Vak are recorded. Then, the turn-OFF waveforms recorded by the waveform recording section 53 are inputted to the waveform computing section 54.

Based on the waveform of the gate turn-OFF current Ig and the turn-OFF waveform of the anode current Ia inputted from the waveform recording section 53, the waveform computing section 54 computes an accumulation time ts explained in the foregoing first embodiment and inputs the result to the time comparator 55. This time comparator 55 has preparatorily stored therein data representing a relational characteristic between the accumulation time ts and junction temperature of the GTO 47 as illustrated in Fig. 2. It is noted that this relational characteristic (temperature dependence characteristic) between the accumulation time ts and junction temperature is preliminarily measured in the same manner as described in the first embodiment.

The waveform computing section 54 also computes the rise time tv of the anode-cathode voltage Vak described in the first embodiment from the turn-OFF waveform of the anode-cathode voltage Vak inputted from the waveform recording section 53, and inputs the result to the time comparator 55. This time comparator 55 has preparatorily stored therein data representing a relational characteristic between the voltage rise time tv and junction temperature of the GTO 47 as illustrated in Fig. 4. It is noted that this relational characteristic between the voltage rise time tv and junction temperature is preliminarily measured as in the relational characteristic between the accumulation time ts and junction temperature.

Further, the waveform computing section 54 computes the decay time ti of the anode current Ia described in the foregoing first embodiment from the waveform of the anode current Ia inputted from the waveform recording section 53, and inputs the result to the time comparator 55. This time comparator 55 has preparatorily stored therein data representing a relational characteristic between the current decay time ti and junction temperature of the GTO 47 as illustrated in Fig. 5. It is noted that this relational characteristic between the current decay time ti and junction temperature of the GTO 47 is preliminarily measured as in the relational characteristic between the accumulation time ts and junction temperature.

Next, the processing flow goes to step S5, where the time comparator 55 makes a comparison between the accumulation time ts inputted from the waveform computing section 54 and the data representing the relational characteristic between accumulation time and junction temperature, and inputs first data, which represent a junction temperature corresponding to the inputted accumulation time ts, to the temperature display (recording) section 56.

The time comparator 55 also makes a comparison between the rise time tv inputted from the waveform computing section 54 and data representing the relational characteristic between the voltage rise time tv and the junction temperature of the GTO 47, and inputs second data, which represents a junction temperature corresponding to the inputted rise time tv, to the temperature display (recording) section 56.

The time comparator 55 further makes a comparison between the decay time ti of the anode current Ia inputted from the waveform computing section 54 and the data representing the relational characteristic between the current decay time ti and the junction temperature of the GTO 47, and inputs third data, which represents a junction temperature corresponding to the inputted decay time ti of the anode current Ia, to the temperature display (recording) section 56.

As a result of this, the temperature display (recording) section 56 displays and records the temperature(s) corresponding to the first to third data representing the junction temperature. For example, the temperature display (recording) section 56 may either select one out of the three pieces of data to display the temperature of the selected data or display an average value of the three pieces of temperature data. Still more, the temperature display (recording) section 56 may display the three pieces of temperature data as they are.

Although three time durations, the accumulation time ts, the voltage rise time tv and the current decay time ti, which are relatively strongly correlated with junction temperatures, are used in this embodiment, yet one or two out of these time durations may be selectively used to determine a junction temperature. Further, the junction temperature may also be determined by utilizing the relational characteristic between the junction temperature and the time duration lasting from the rise time point of the gate reverse voltage measured by the gate circuit 41 until the time point when the anode-cathode voltage Vak becomes equal to the supply voltage of the DC power supply 31. Furthermore, although the load reactor 36 is used as a load in this embodiment, a resistor or a series connection of a reactor and a resistor or the like may be used as the load instead of the load reactor 36. Moreover, although a chopper circuit is used as the gate circuit 41 in this embodiment, any circuit other than chopper circuits is also applicable only if the circuit allows current conduction and interruption to the SiC GTO.

### (Third Embodiment)

Next, a thermal resistance measurement method for semiconductor devices, which is a third embodiment of the invention, is explained. The thermal resistance measurement method of this third embodiment makes use of the junction temperature measurement method of the first embodiment described above.

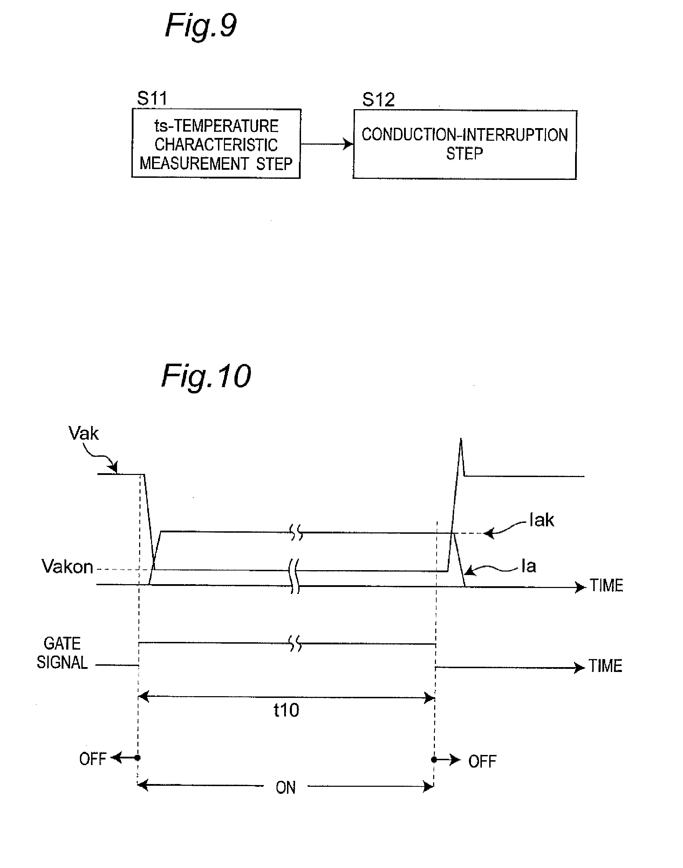

In this third embodiment, first, as shown by step S11 of Fig. 9, with respect to a SiC GTO (Gate Turn-Off thyristor) as an example of a semiconductor switching element that is an object of thermal resistance measurement, relational characteristics between accumulation time ts and junction temperature illustrated in Figs. 2, 4 and 5, relational characteristics between voltage rise time tv and junction temperature, and relational characteristics between current decay time ti and junction temperature are determined from such turn-OFF waveforms (gate turn-OFF current Ig, anode current Ia, anode-cathode voltage Vak) as illustrated in Fig. 1 in the same manner as described in the first embodiment.

Next, the processing flow goes to step S12, where a junction temperature of the GTO is first measured, and the measured junction temperature is assumed as a first junction temperature T1. This measurement of junction temperature may be performed either with a contact surface thermometer or by the temperature measurement method of the foregoing first embodiment, as an example.

Next, as shown in the waveform diagram of Fig. 10, an ON control signal is inputted as a gate signal to the gate of the GTO to turn ON the GTO. After elapse of a certain time period t10 from this turn-ON, an OFF control signal is inputted as a gate signal to the gate of the GTO to turn OFF the GTO from the ON state. From the turn-OFF waveforms (gate turn-OFF current Ig, anode current Ia, anode-cathode voltage Vak) at the above turn-OFF of the GTO, the junction temperature of the GTO is measured in the same manner as in the first embodiment, and the measured junction temperature is assumed as a second junction temperature T2.

In the certain ON-state time period t10, the anode-cathode voltage Vak applied to the GTO causes the junction temperature of the GTO to increase by T2-T = ΔT. The thermal resistance can be determined as a value (ΔT/Q) which is an increment ΔT of the junction temperature during the period t10 divided by a heating value Q of the GTO during the period t10.

In addition, the heating value Q of the GTO is calculated from the ON-state period t10 (sec.), the anode-cathode voltage Vakon (V) of the ON-state period t10 and the anode current Iak (A) of the ON-state period t10. Hence, it follows that heating value Q(J) = Vakon×Iak×t10.

As described above, accumulation time ts, voltage rise time tv and current decay time ti in the turn-OFF waveforms of a semiconductor switching element exemplified by the GTO depend large on the junction temperature. Therefore, according to the thermal resistance measurement method of this embodiment, the thermal resistance of the GTO can be measured with high accuracy, as compared with the conventional case in which the thermal resistance is calculated by a junction temperature determined by using the conventional temperature dependence of the ON-state voltage. Also, thermal resistance can be measured even at high temperatures at which almost no temperature dependence of the ON-state voltage exists. Further, since the accumulation time ts (voltage rise time tv, current decay time ti) reflect the junction temperature of the GTO, the junction temperature can be measured without any time delay, so that transient thermal resistance can be measured with high accuracy. In addition, the turn-OFF characteristic time may be given by any one out of the three, accumulation time ts, voltage rise time tv and current decay time ti, or by taking an average of three temperatures determined from the individual characteristic time durations.

### (Fourth Embodiment)

Next, a thermal resistance measurement device, which is a fourth embodiment of the invention, is explained. The thermal resistance measurement device of this fourth embodiment makes use of the thermal resistance measurement method of the third embodiment described above. Also, the thermal resistance measurement device of the fourth embodiment has a circuit in which the load reactor 36 is substituted by a resistor in the junction temperature measurement device 30 of the foregoing second embodiment. In the fourth embodiment also, the time duration for which the GTO is kept ON is set longer than in the junction temperature measurement device 30 of the foregoing second embodiment, the time being set as the ON-state period t10 in the third embodiment. During this ON-state period t10, the GTO is subjected to heat generation so as to increase the junction temperature.

In the thermal resistance measurement device of this embodiment, a thermal resistance (ΔT/Q) of the GTO is calculated from an increment ΔT of the junction temperature during the period t10 and a heating value Q of the GTO during the period t10, and the calculated thermal resistance is displayed on the display section.

According to the thermal resistance measurement device of this embodiment, the thermal resistance can be measured with high accuracy, as compared with conventional devices in which the thermal resistance is calculated from the conventional temperature dependence of the ON-state voltage. Also, thermal resistance can be measured even at high temperatures at which almost no temperature dependence of the ON-state exists.

### (Fifth Embodiment)

Next, a degradation status evaluation method for semiconductor devices, which is a fifth embodiment of the invention, is explained. This fifth embodiment makes use of the thermal resistance measurement device of the foregoing third embodiment. That is, the fifth embodiment is to evaluate failure or degradation status of a GTO based on a value of measured thermal resistance of the GTO by the thermal resistance measurement method of the foregoing third embodiment.

As the semiconductor device is constituted of a semiconductor chip forming a GTO and a package, with a poor contact closeness between the GTO semiconductor chip and the package, conduction through the semiconductor device is likely to cause increases in junction temperatures of the GTO, so that the accumulation time ts becomes longer. Thus, the thermal resistance becomes higher. Further, as the contact closeness between semiconductor chip and package is worsened by long-time use, occurrence of partial peeling or the like also makes it likely to occur that the junction temperature increases, the accumulation time ts becomes longer and the thermal resistance becomes larger.

Further, even without any problem in the contact closeness between semiconductor chip and package, there are some cases where the accumulation time ts becomes shorter. This is a case that defects inside the semiconductor chip are increased so that the life time of minority carriers is shortened. In this case, the accumulation time ts becomes shorten than its initial value. In this case, on condition that an initial-stage temperature dependence curve of less defects is used as the temperature dependence curve of the accumulation time ts (Fig. 2) in the thermal resistance measurement method of the third embodiment, a measured junction temperature becomes lower than an actual junction temperature. As a result, a thermal resistance calculated from the measured junction temperature becomes smaller than an initial thermal resistance. That is, a degree of degradation of the semiconductor chip (GTO) can be evaluated based on a decrement to which a value of thermal resistance calculated from a measured junction temperature has decreased from a value of thermal resistance calculated from an initially measured junction temperature.

Further in the degradation status evaluation method of this embodiment, the degradation status of the semiconductor device can be grasped by applying a voltage to between main electrodes (i.e., between anode and cathode) of the semiconductor device and by measuring a current flowing into the main electrodes (i.e., anode current Ia) and the voltage between the main electrodes (i.e., anode-cathode voltage Vak) as well as the gate current or gate voltage of the semiconductor device. Thus, there is no need for removing the semiconductor device from the stack, so that the term of work for periodic inspections can be shortened. Besides, the progress of degradation can be grasped without removing the semiconductor device from the stack, so that the semiconductor switching element can be replaced with another one before breakage of the semiconductor switching element, allowing unexpected accidents to be prevented beforehand. Moreover, since progresses of the device degradation can be grasped beforehand, more than necessary device replacements can be avoided, allowing a cost reduction to be achieved.

Although the first to fifth embodiments have been described on cases in which the semiconductor switching element is a SiC GTO, yet the invention is applicable to semiconductor switching elements having large temperature dependence of turn-OFF period waveforms, such as SiC bipolar semiconductor elements exemplified by SiC IGBT insulated-gate bipolar transistors. Further, although SiC is selected as the wide-gap semiconductor in the first to fifth embodiments, yet the invention is applicable similarly to such wide-gap semiconductors as gallium nitride or diamond. That is, the invention is applicable also to other GTOs, such as GaN GTOs and diamond GTOs, without being limited to SiC GTOs, as well as applicable to other bipolar semiconductor devices without being limited to SiC bipolar semiconductor elements.

Embodiments of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A temperature measurement method for semiconductor devices, comprising:
a first step for, with a semiconductor switching element set to a specified temperature, performing a characteristic measurement for turning OFF the semiconductor switching element of the specified temperature from an ON state and measuring specified turn-OFF characteristic time at the turn-OFF, the characteristic measurement being done a plurality of times with temperature changed to preliminarily measure a relational characteristic between the turn-OFF characteristic time and temperatures of the semiconductor switching element;
a second step for turning OFF the semiconductor switching element from an ON state and measuring the turn-OFF characteristic time at the turn-OFF; and
a third step for converting the turn-OFF characteristic time measured in the second step into a temperature of the semiconductor switching element based on the relational characteristic preliminarily measured in the first step.

2. The temperature measurement method for semiconductor devices as claimed in Claim 1, wherein
the semiconductor switching element is a bipolar semiconductor element.

3. The temperature measurement method for semiconductor devices as claimed in Claim 1, wherein
the semiconductor switching element is a GTO, and
the turn-OFF characteristic time is
accumulation time lasting from a rise start time point of a gate turn-OFF current until a decay start time point of an anode current.

4. The temperature measurement method for semiconductor devices as claimed in Claim 1, wherein
the semiconductor switching element is a GTO, and
the turn-OFF characteristic time is
rise time of an anode-cathode voltage.

5. The temperature measurement method for semiconductor devices as claimed in Claim 1, wherein
the semiconductor switching element is a GTO, and
the turn-OFF characteristic time is
decay time of an anode current.

6. The temperature measurement method for semiconductor devices as claimed in Claim 3, wherein
the semiconductor switching element is a SiC GTO.

7. The temperature measurement method for semiconductor devices as claimed in Claim 4, wherein
the semiconductor switching element is a SiC GTO.

8. The temperature measurement method for semiconductor devices as claimed in Claim 5, wherein
the semiconductor switching element is a SiC GTO.

9. The temperature measurement method for semiconductor devices as claimed in Claim 3, wherein
the semiconductor switching element is GaN GTO.

10. The temperature measurement method for semiconductor devices as claimed in Claim 4, wherein
the semiconductor switching element is GaN GTO.

11. The temperature measurement method for semiconductor devices as claimed in Claim 5, wherein
the semiconductor switching element is GaN GTO.

12. The temperature measurement method for semiconductor devices as claimed in Claim 3, wherein
the semiconductor switching element is a diamond GTO.

13. The temperature measurement method for semiconductor devices as claimed in Claim 4, wherein
the semiconductor switching element is a diamond GTO.

14. The temperature measurement method for semiconductor devices as claimed in Claim 5, wherein
the semiconductor switching element is a diamond GTO.

15. A temperature measurement device for measuring temperature of a semiconductor device by using the temperature measurement method for semiconductor devices as claimed in Claim 1, the measurement device comprising:
a DC power supply for applying a DC voltage to between output terminals of a semiconductor switching element;
a control circuit for inputting a control signal to a control terminal of the semiconductor switching element to turn ON and OFF the semiconductor switching element;
a waveform measurement section for measuring a turn-OFF waveform of the semiconductor switching element;
a waveform computing section for computing specified turn-OFF characteristic time based on a turn-OFF waveform measured by the waveform measurement section; and
a temperature calculating section in which data representing relational characteristics between preliminarily measured turn-OFF characteristic time of the semiconductor switching element and temperatures of the semiconductor switching element are stored and which determines, from the relational characteristics, a temperature of the semiconductor switching element corresponding to the turn-OFF characteristic time inputted from the waveform computing section.

16. The temperature measurement device for semiconductor devices as claimed in Claim 15, wherein
the waveform measurement section has at least one of an output current measurement section for measuring a current flowing between the output terminals of the semiconductor switching element, a control current measurement section for measuring a current flowing through the control terminal, a control voltage measurement section for measuring a voltage of the control terminal, and an output voltage measurement section for measuring a voltage between the output terminals.

17. A thermal resistance measurement method for measuring thermal resistance of a semiconductor device by using the temperature measurement method for semiconductor devices as claimed in Claim 1, the method comprising:
a first measurement step for preliminarily measuring relational characteristics between turn-OFF characteristic time of a semiconductor switching element and temperatures of the semiconductor switching element by the first step;
a second measurement step for measuring a first temperature of the semiconductor switching element, then turning ON the semiconductor switching element, and after elapse of specified time after the turn-ON, turning OFF the semiconductor switching element and measuring a second temperature of the semiconductor switching element by the second and third steps; and
a step for determining a thermal resistance by a calculation that a value resulting from subtracting the first temperature from the second temperature is divided by a heating value of the semiconductor switching element generated during the specified time.

18. A thermal resistance measurement device for measuring thermal resistance of a semiconductor device by using the thermal resistance measurement method for semiconductor devices as claimed in Claim 17, the device comprising:
a DC power supply for applying a DC voltage via a load to between output terminals of a semiconductor switching element;
a control circuit for inputting an ON control signal to a control terminal of the semiconductor switching element to turn ON the semiconductor switching element from an OFF state, and after elapse of specified time after the turn-ON of the semiconductor switching element, inputting an OFF control signal to the control terminal to turn OFF the semiconductor switching element;
a waveform measurement section for measuring a waveform of the turn-OFF of the semiconductor switching element;
a waveform computing section for computing specified turn-OFF characteristic time based on the turn-OFF waveform measured by the waveform measurement section;
a temperature calculating section in which data representing relational characteristics between preliminarily measured turn-OFF characteristic time of the semiconductor switching element and temperatures of the semiconductor switching element are stored and which determines, from the relational characteristics, a temperature of the semiconductor switching element corresponding to the specified turn-OFF characteristic time inputted from the waveform computing section; and
a thermal resistance calculating section for determining a thermal resistance by such a calculation that subtracting a before-turn-ON temperature of the semiconductor switching element from the temperature of the semiconductor switching element determined by the temperature calculating section and dividing the result by a heating value of heat generated by the semiconductor switching element during the specified time.

19. A degradation status evaluation method for semiconductor devices for evaluating a degradation status of a semiconductor device based on a thermal resistance measured by the thermal resistance measurement method for semiconductor devices as claimed in Claim 17.
